(19) Europäisches Patentamt
European Patent Office
Office européen des brevets

(11) **EP 2 986 833 B1**

(12) **FASCICULE DE BREVET EUROPEEN**

(45) Date de publication et mention de la délivrance du brevet:
**11.09.2019 Bulletin 2019/37**

(21) Numéro de dépôt: **13742477.6**

(22) Date de dépôt: **15.04.2013**

(51) Int Cl.:
*F02D 41/00* <sup>(2006.01)</sup>   *F01N 5/04* <sup>(2006.01)</sup>
*F02B 37/00* <sup>(2006.01)</sup>   *F02B 37/007* <sup>(2006.01)</sup>
*F02B 37/12* <sup>(2006.01)</sup>   *F02B 41/10* <sup>(2006.01)</sup>
*F02B 63/04* <sup>(2006.01)</sup>

(86) Numéro de dépôt international:
**PCT/FR2013/050823**

(87) Numéro de publication internationale:
**WO 2014/170559 (23.10.2014 Gazette 2014/43)**

(54) **PROCÈDE D'AMÉLIORATION DU RENDEMENT ÉNERGÉTIQUE D'UN SYSTÈME D'ENTRAÎNEMENT**

VERFAHREN ZUR VERBESSERUNG DER ENERGIEEFFIZIENZ EINES ANTRIEBSSYSTEMS

METHOD FOR IMPROVING THE ENERGY EFFICIENCY OF A DRIVE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**24.02.2016 Bulletin 2016/08**

(73) Titulaire: **Valeo Systèmes de Contrôle Moteur 95800 Cergy Saint Christophe (FR)**

(72) Inventeurs:
• **ISMAIL, Youssef 75014 Paris (FR)**
• **MENEGAZZI, Pascal 78500 Sartrouville (FR)**
• **DECOSTER, Sylvain 78860 Saint-Nom-la-Breteche (FR)**

• **ANGELOT, Pierre-Julian 78500 Sartrouville (FR)**
• **CHESSE, Pascal 44321 Nantes Cedex 3 (FR)**
• **CHALET, David 44321 Nantes Cedex 3 (FR)**

(74) Mandataire: **Garcia, Christine Propriété Intellectuelle Valeo Systèmes de Contrôle Moteur 14, avenue des Béguines 95800 Cergy St Christophe (FR)**

(56) Documents cités:
EP-A1- 2 410 151        WO-A1-2008/135059
WO-A1-2010/092945       US-A1- 2012 055 152

**Description**

L'invention concerne un procédé d'amélioration du rendement énergétique d'un système d'entraînement comprenant un turbocompresseur et une turbine de récupération montés en parallèle sur la ligne d'échappement. Un tel système est décrit dans le documents WO2010/092945 A1.

Typiquement, un moteur comprend un bloc moteur délimitant des chambres ou cylindres de combustion ayant une extrémité fermée par une culasse et une extrémité opposée fermée par un piston reçu à coulissement dans le cylindre. Chaque cylindre de combustion est associé à des moyens d'admission d'air et de carburant et à des moyens d'échappement des gaz brûlés comprenant respectivement des soupapes d'admission et d'échappement. Le couple total produit par un moteur à combustion est la somme des couples individuels produits par chacun des cylindres. A l'issue de la combustion, les gaz d'échappement sont relâchés dans l'atmosphère. Ces gaz d'échappement contiennent de l'énergie qu'il est avantageux de récupérer.

Il est connu d'utiliser un turbocompresseur dans lequel une turbine est entrainée par les gaz d'échappement de façon à permettre la compression des gaz à l'admission. Le turbocompresseur augmente la pression des gaz à l'admission du moteur pour augmenter son rendement. Le turbocompresseur peut être associé à une turbine de récupération pour compléter la récupération de l'énergie des gaz d'échappement. L'énergie récupérée par la turbine de récupération peut être utilisée pour produire de l'énergie électrique ou de l'énergie mécanique, par exemple afin de remettre du couple sur le vilebrequin du moteur. La turbine de récupération peut être montée sur la ligne d'échappement en série avec le turbocompresseur. Alternativement, la turbine de récupération peut être montée en parallèle du turbocompresseur. Les architectures série sont principalement utilisées alors que 'les architectures parallèles peuvent avantageuses en termes d'encombrement.

Cependant, les turbocompresseurs et turbines de récupération conçus pour l'architecture série ne sont pas optimales pour l'architecture parallèle. Il est donc recherché un procédé permettant d'adapter les caractéristiques géométriques du turbocompresseur et/ ou de la turbine de récupération afin de récupérer un maximum d'énergie des gaz d'échappement dans une architecture parallèle.

A cet effet, il est proposé un procédé d'amélioration du rendement énergétique d'un système d'entraînement, ledit système comprenant :

- un moteur muni d'une ligne d'échappement ;
- un turbocompresseur ayant une turbine montée sur la ligne d'échappement pour être entrainée par une première partie des gaz d'échappement de façon à déterminer un niveau de suralimentation du moteur ;
- une turbine de récupération montée sur la ligne d'échappement en parallèle du turbocompresseur pour être entrainée par une seconde partie des gaz d'échappement de façon à récupérer une puissance issue de ladite seconde partie des gaz d'échappement ;

ledit procédé comprenant les étapes consistant à :

- déterminer un niveau de suralimentation de sorte que le moteur délivre une première valeur de puissance d'entrainement ;
- modifier de façon croissante ou décroissante, c'est-à-dire de façon monotone, au moins un paramètre géométrique de la turbine du turbocompresseur, et pour une valeur du paramètre géométrique, déterminer la puissance récupérée par la turbine de récupération et la différence entre la valeur de la puissance d'entraînement correspondant à ladite valeur du paramètre géométrique et ladite première valeur de puissance d'entrainement ;
- stopper la modification du paramètre géométrique de la turbine du turbocompresseur lorsque la puissance récupérée par la turbine de récupération atteint une valeur maximale ou lorsque ladite différence de puissance d'entraînement est supérieure à un seuil donné.

En modifiant le paramètre géométrique de la turbine du turbocompresseur de façon monotone, on modifie progressivement les conditions dans la zone située en sortie du moteur et en entrée des turbines, en particulier le débit et/ou la pression des gaz d'échappement. Ces changements de conditions entraînent également une modification de la puissance recouvrée par la turbine de récupération. En surveillant la puissance récupérée jusqu'à l'atteinte d'une valeur maximale, on est sûr d'avoir un turbocompresseur ayant des caractéristiques géométriques permettant à la turbine de récupération de récupérer un maximum d'énergie des gaz d'échappement. Cependant, la puissance d'entrainement délivrée par le moteur peut-être impactée par la modification des conditions dans la zone entre la sortie du moteur et l'entrée des turbines. En s'assurant que la puissance d'entraînement reste comprise dans une fenêtre de valeur on s'assure que les performances du moteur ne sont pas dégradées par la maximisation de la puissance recouvrée par la turbine de récupération.

Selon une variante, l'étape de modification comprend la diminution de la perméabilité de la turbine du turbocompresseur et, pour une valeur de perméabilité, la détermination de la puissance récupérée par la turbine de récupération et de la différence entre la valeur de la puissance d'entraînement correspondant à ladite valeur de perméabilité et ladite première valeur de puissance d'entrainement. En outre, l'étape d'arrêt comprend l'arrêt de la diminution de la perméabilité de la turbine du turbocompresseur lorsque la puissance récupérée par la turbine de récupération atteint une valeur maximale ou lorsque ladite différence de puissance d'entraînement dépasse un seuil donné.

La perméabilité caractérise la relation entre le débit et le rapport de pression dans la turbine. En particulier, la perméabilité est modifiée en augmentant le rapport de pression et en diminuant le débit. La perméabilité peut-être déterminée par la géométrie de la volute, de la roue, ou du diffuseur de la turbine.

Selon un mode de réalisation, le turbocompresseur comprend une turbine à géométrie variable. L'étape de modification du paramètre géométrique peut alors comprendre la modification de la section de passage du diffuseur de la turbine et/ ou la modification de l'angle d'incidence du gaz sur les aubes de la turbine. Le procédé permet d'adapter la géométrie de la turbine à géométrie variable du turbocompresseur en fonction d'une part de la puissance d'entraînement, et/ ou d'autre part des caractéristiques de la turbine de récupération.

Selon un mode de réalisation, le procédé comprend en outre les étapes consistant à :

- augmenter la perméabilité de la turbine de récupération et, pour une valeur de perméabilité, procéder auxdites étapes de modification du paramètre géométrique de la turbine du turbocompresseur et d'arrêt de la modification du paramètre géométrique ;
- déterminer la puissance récupérée par la turbine de récupération et la différence entre la valeur de la puissance d'entraînement correspondant à ladite valeur de perméabilité de la turbine du turbogénérateur et ladite première valeur de puissance d'entrainement ;
- stopper l'augmentation de la perméabilité de la turbine de récupération lorsque la puissance récupérée par la turbine de récupération atteint une valeur maximale ou lorsque ladite différence de puissance d'entraînement dépasse un seuil donné.

En particulier, la perméabilité est augmentée en augmentant le débit de la turbine et en diminuant le rapport de pression.

Ces étapes permettent d'obtenir une géométrie de la turbine de récupération ayant une puissance recouvrée maximale. En augmentant la perméabilité de la turbine de récupération, on modifie la puissance recouvrée par la turbine de récupération. En surveillant la puissance récupérée jusqu'à l'atteinte d'une valeur maximale, on est sûr d'avoir un turbocompresseur ayant des caractéristiques géométriques permettant à la turbine de récupération de récupérer un maximum d'énergie des gaz d'échappement.

Cependant, en modifiant la perméabilité de la turbine de récupération, on peut également influencer les conditions en entrée de la turbine du turbocompresseur. Le turbocompresseur peut alors ne plus pouvoir assurer un niveau de suralimentation permettant de maintenir un niveau de puissance d'entraînement délivré par le moteur. Les étapes de modification du paramètre géométrique de la turbine du turbocompresseur et d'arrêt de la modification du paramètre géométrique permettent d'adapter la turbine du turbocompresseur à la perméabilité de la turbine de récupération.

Selon un mode de réalisation, la turbine de récupération étant une turbine à géométrie variable, l'étape d'augmentation de la perméabilité de la turbine comprend l'augmentation de la section de passage du diffuseur de la turbine et/ ou la modification de l'angle d'incidence du gaz sur les aubes de la turbine. Le procédé permet d'adapter la géométrie de la turbine de récupération en fonction da la puissance d'entraînement.

Le procédé est applicable à un système d'entraînement dans lequel la turbine du turbocompresseur fonctionne à faible débit et fort rapport de pression.

Par exemple, pour un moteur 2L diesel avec recirculation des gaz, le rapport de pression pourrait être inférieur à 1,6 et le débit être supérieur à 0,06kg/s.

D'autres caractéristiques et avantages de l'invention apparaîtront à la lecture de la description qui suit de modes de réalisation de l'invention, donnés à titre d'exemple, et en référence aux figures annexées qui montrent :

- figure 1, un schéma d'un système d'entraînement ayant un turbocompresseur et une turbine de récupération montés en parallèle sur une ligne d'échappement ;
- figure 2, un schéma synoptique d'un procédé selon un premier mode de réalisation de l'invention ;
- figure 3, une cartographie débit de gaz-rapport de pression de la turbine du turbocompresseur obtenue pour des perméabilités et des vitesses de rotation différentes ;
- figure 4, un diagramme comparatif des puissances d'entraînement obtenues pour différentes valeur de perméabilité de la turbine du turbocompresseur ;
- figure 5, un diagramme de compression du cylindre d'un moteur ;
- figure 6, un diagramme comparatif des puissances récupérées par la turbine de recouvrement obtenues pour différentes valeur de perméabilité de la turbine du turbocompresseur ;
- figure 7, un diagramme comparatif des gains globaux obtenus pour différentes valeur de perméabilité de la turbine du turbocompresseur ;
- figure 8, un schéma synoptique d'un procédé selon un second mode de réalisation de l'invention ;
- figure 9, un graphe montrant la puissance d'entraînement en fonction de la section de passage de la turbine de récupération pour différents points de fonctionnement du moteur ;
- figure 10, un graphe montrant la puissance récupérée par la turbine de récupération en fonction de la section de passage de la turbine de récupération pour différents points de fonctionnement du moteur ;
- figure 11, un graphe montrant le gain global en fonction de la section de passage de la turbine de récupération pour différents points de fonctionnement du moteur.

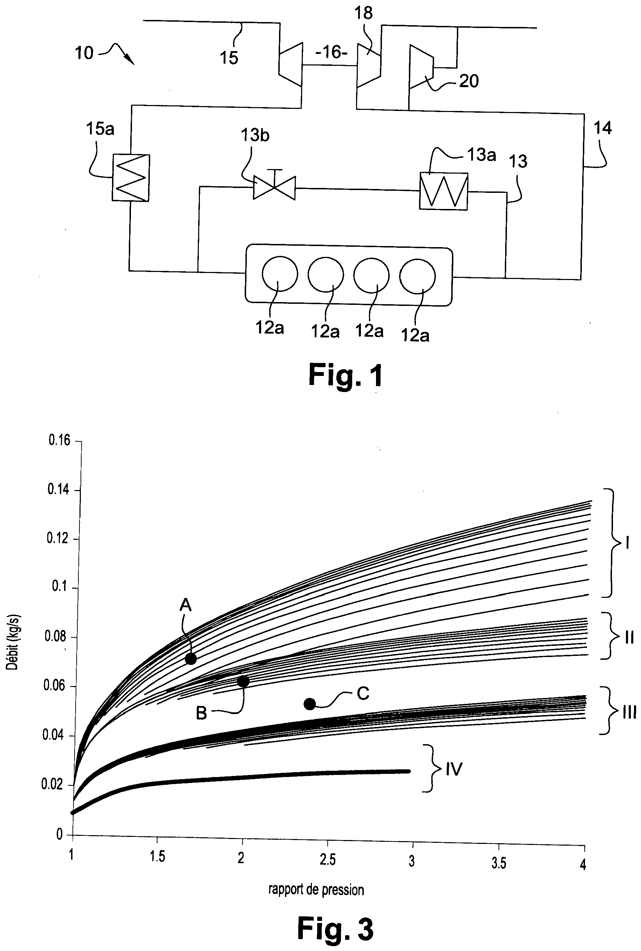

La figure 1 représente un exemple de système d'entraînement 10.

Le système 10 comprend un moteur 12 muni d'une ligne d'échappement 14. Le moteur 12 comprend des cylindres 12a dans lesquels la combustion d'un carburant permet de produire un couple d'entraînement.

Un turbocompresseur 16 est utilisé pour compresser les gaz sur une ligne d'admission 15 du moteur 12 de façon à déterminer un niveau de suralimentation du moteur 12. Le turbocompresseur 16 comprend une turbine 18 montée sur la ligne d'échappement 14 pour être entrainée par une première partie des gaz d'échappement et permettre la compression des gaz à l'admission. Ces gaz peuvent être refroidis par un refroidisseur 15a avant d'être introduits dans le moteur 12.

Le système 10 comprend en outre une turbine de récupération 20 montée sur la ligne d'échappement 14 en parallèle du turbocompresseur 16. La turbine de récupération 20 est ainsi entrainée par une seconde partie des gaz d'échappement. La turbine de récupération 20 permet de récupérer la puissance issue de la seconde partie des gaz d'échappement pour produire par exemple une énergie mécanique ou électrique. En particulier, la turbine de récupération 20 peut appartenir à un turbogénérateur produisant de l'électricité à partir des gaz d'échappement. La turbine de récupération 20 peut aussi permettre de rajouter du couple sur le vilebrequin du moteur, par exemple par un jeu d'engrenages.

Le système 10 peut comprendre une ligne de recirculation 13 des gaz d'échappement permettant de récupérer une partie des gaz d'échappement pour les réinjecter à l'admission. La ligne de recirculation peut comprendre un refroidisseur 13a pour diminuer la température des gaz avant réinjection à l'admission et une vanne 13b permettant de doser le taux de recirculation.

La turbine 18 du turbocompresseur 16 est une turbine à géométrie variable. Dans une telle turbine, les paramètres géométriques tels que le rapport de section ou l'ouverture peuvent être modifiées, en particulier pour être adaptés au point de fonctionnement du moteur.

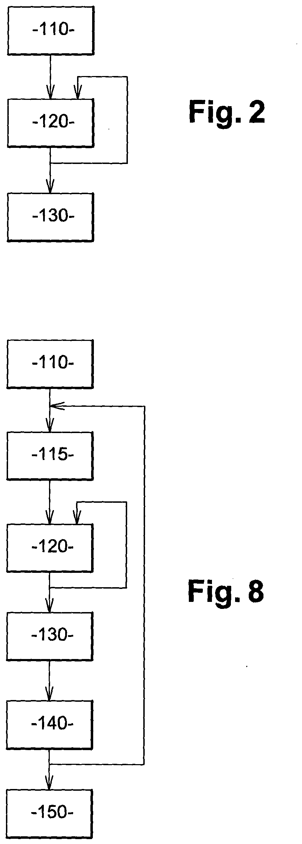

Un procédé d'amélioration du rendement énergétique selon un mode réalisation illustré en figure 2 peut être mis en oeuvre sur le système 10 de la figure 1. En faisant varier la perméabilité de la turbine 18 du turbocompresseur 16, le procédé permet d'obtenir une puissance maximale récupérée par la turbine de récupération.

La perméabilité caractérise la relation entre le rapport de pression entre l'entrée et la sortie de la turbine, et le débit de la turbine. La figure 3 représente un exemple d'une cartographie débit (Kg/s) - rapport de pression. Chaque groupe de caractéristiques I, II, II, IV est obtenu pour une perméabilité donnée de la turbine. En particulier, la variation de la perméabilité est obtenue en faisant varier l'ouverture de la turbine, par exemple par l'intermédiaire d'une vanne. Dans un groupe de caractéristiques, chaque caractéristique est obtenue pour une vitesse de rotation donnée de la turbine.

La puissance P isentropique (en kW) d'une turbine peut être exprimée par la relation suivante :

$$P = \dot{m} \times C_P \times T_{in} \times \left[ 1 - \left( \frac{1}{RP} \right)^{\frac{\gamma - 1}{\gamma}} \right] \quad (1)$$

Où $\dot{m}$ est le débit de la turbine (kg/s) ; $C_P$ est une constante de chaleur des gaz d'échappement (J. K$^{-1}$/kg) ; $T_{in}$ est la température à l'entrée de la turbine (K) ; RP est le rapport de pression entre l'entrée et la sortie de la turbine ; et y est un rapport de chaleur capacitive. Ces paramètres peuvent être obtenus par des mesures ou des estimations. En faisant varier la perméabilité, en particulier l'ouverture de la turbine, le couple débit $\dot{m}$ - rapport de pression RP peut être modifié.

Dans une étape 110, le turbocompresseur 16 est configuré pour produire un niveau de suralimentation permettant au moteur 12 de délivrer une première valeur de puissance d'entrainement (N.m). En particulier, la valeur de puissance d'entraînement peut correspondre à un point de fonctionnement du moteur (nombre de tours/minute ; charge) requis pour obtenir un déplacement d'un véhicule dans lequel est monté le système d'entraînement 10. Dans l'exemple considéré, la première valeur de puissance d'entraînement correspond à un premier point A de la cartographie de la figure 3. Le premier point A se trouve dans un premier groupe de caractéristique I avec une ouverture de la turbine d'environ 50-60%.

Ensuite, on procède à la diminution 120 de la perméabilité de la turbine 18 du turbocompresseur 16, en particulier en diminuant l'ouverture de la turbine 18. L'ouverture de la turbine peut être diminuée progressivement par pas. Pour chaque valeur d'ouverture de la turbine 18 du turbocompresseur 16, le couple débit - rapport de pression de la turbine 18 du turbocompresseur 16 est modifié. L'ouverture est diminuée avec une diminution du débit et une augmentation du rapport de pression.

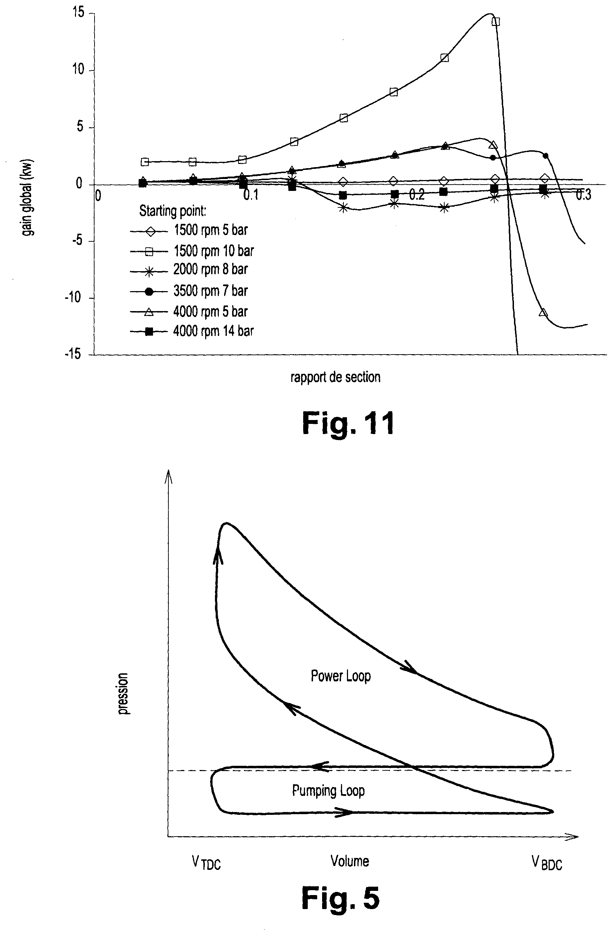

Du fait de la diminution du débit de la turbine 18 du turbocompresseur 16, le débit de la turbine de récupération 20 en parallèle va augmenter. Ainsi, on augmente la puissance récupérée par la turbine 20, comme il ressort de la relation (1). La figure 5 représente la puissance récupérée obtenue pour les différentes valeurs d'ouverture de la turbine 18 du turbocompresseur 16.

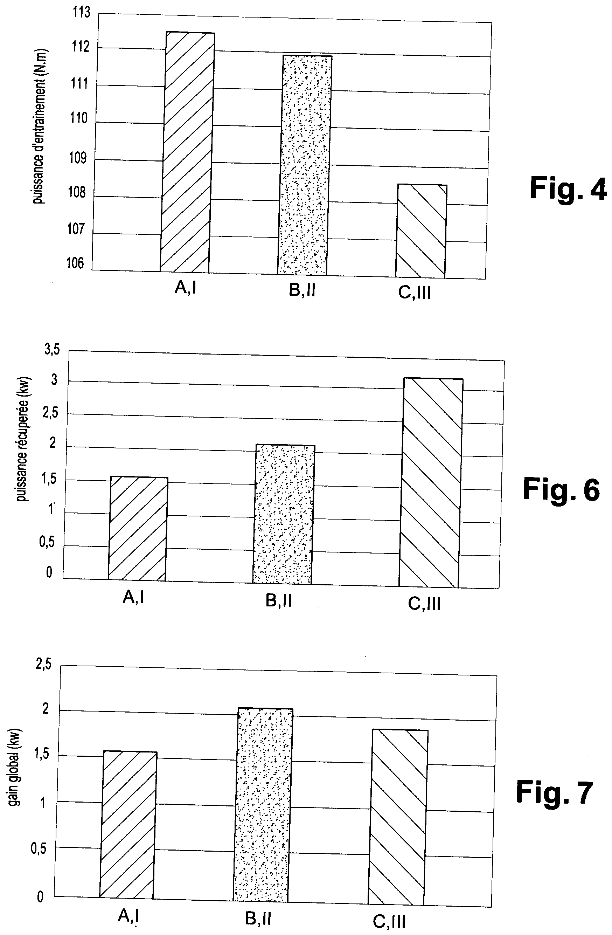

A chaque valeur d'ouverture, le rapport de pression de la turbine 18 du turbocompresseur 20 augmente, ce qui se traduit par une augmentation de la pression en sortie du moteur 12. Cette augmentation de la pression impacte peu la puissance récupérée par la turbine de récupération 20. Cependant, une contre-pression existe alors en sortie du moteur. Cette contre-pression entraine des pertes par pompage plus élevées qui diminuent la puissance d'entraînement disponible. Pour un cylindre 12a, les pertes par pompage peuvent être obtenues en intégrant la pression sur la boucle de pompage du cycle du moteur comme représenté en figure 5. La figure 6 représente la puissance d'entraînement obtenue pour chaque ouverture de la turbine 18 du turbocompresseur 16 en tenant compte des pertes par pompage.

Dans l'exemple illustré sur les figures, un second point B de la cartographie appartient à un second groupe de caractéristiques II correspondant à une ouverture comprise entre 40 et 30%. La valeur de puissance d'entraînement correspondante est légèrement inférieure à la première valeur de puissance (correspondant au premier groupe de caractéristiques I). Un troisième point B de la cartographie appartient à un troisième groupe de caractéristiques III correspondant à une ouverture comprise entre 20 et 10%. La valeur de puissance d'entraînement correspondante est beaucoup plus inférieure à la première valeur de puissance (correspondant au premier groupe de caractéristiques I).

Dans le procédé, lorsque la puissance d'entraînement diminue de façon trop importante, la diminution de l'ouverture, c'est-à-dire de la perméabilité, de la turbine 18 du turbocompresseur 16 est arrêtée. Autrement dit, lorsque la différence entre la valeur de la puissance d'entraînement correspondant à la valeur d'ouverture B, C et la première valeur de puissance d'entrainement correspondant à la valeur initiale d'ouverture I dépasse un seuil, la diminution de l'ouverture est stoppée.

Dans l'exemple illustré, la troisième ouverture III entraîne une diminution trop importante de la puissance d'entraînement, l'ouverture II est donc préférée. Ceci bien que la troisième ouverture III permet de récupérer plus d'énergie avec la turbine de récupération 20. Le système 10 fonctionne alors avec une valeur d'ouverture II de la turbine 18 du turbocompresseur 20.

Dans un exemple non représenté, à l'ouverture III, la puissance d'entrainement aurait pu rester inférieure au seuil, avec une puissance récupérée par la turbine 20 inférieure à celle récupérée pour la deuxième ouverture II. Ceci peut être le cas en fonction du point de fonctionnement du moteur 12. Dans cet exemple, l'ouverture II aurait aussi été préférée. Le système 10 fonctionnerait également avec une valeur d'ouverture II de la turbine 18 du turbocompresseur 20.

Un critère sur le gain global du système 10 peut être utilisé, qui correspond à la différence entre la puissance d'entraînement et la puissance récupérée par la turbine de récupération 20. La figure 7 représente le gain global pour chaque valeur d'ouverture i, II, III. Le gain global est particulièrement utilisé lorsqu'on s'intéresse au rendement du système 10 dans son ensemble, sans contrainte sur la puissance d'entraînement délivrée par le moteur 12.

Dans le système d'entrainement 10, la turbine de récupération 20 peut être de type à géométrie variable. Comme dans la turbine 18 du turbocompresseur 16, les paramètres géométriques de la turbine de récupération 20, tels que le rapport de section ou l'ouverture, peuvent être modifiés, en particulier pour être adaptés au point de fonctionnement du moteur 12.

Un procédé d'amélioration du rendement énergétique selon un mode réalisation illustré en figure 8 peut être mis en oeuvre sur ce système 10. En faisant varier la perméabilité de la turbine de récupération 20, le procédé permet d'obtenir une puissance maximale récupérée par la turbine de récupération 20.

Le procédé de ce mode réalisation comprend une étape 110 de détermination d'une première valeur de puissance d'entrainement identique à celle du mode de réalisation illustré en figure 2.

Ensuite dans une étape 115, on augmente la perméabilité de la turbine de récupération 20, en particulier depuis une première valeur P1. Par exemple, cette première valeur P1 est sensiblement égale à zéro. Notamment, la perméabilité est augmentée en augmentant le rapport de section de la turbine de récupération 20. Le rapport de section de la turbine 20 peut être augmentée progressivement par pas.

A chaque valeur de rapport de section de la turbine de récupération 20, on procède aux étapes de diminution 120 de perméabilité de la turbine 18 du turbocompresseur 16 et d'arrêt 130 de cette diminution décrites pour le mode de réalisation illustré en figure 2. Ainsi, à chaque valeur de rapport de section de la turbine de récupération 20, la turbine 18 du turbocompresseur 20 est configurée pour que la puissance récupérée par la turbine de récupération 20 soit maximale.

Le couple débit - rapport de pression de la turbine de récupération 20 est modifié avec la valeur du rapport de section de la turbine de récupération 20. En particulier, l'augmentation du rapport de section s'accompagne d'une augmentation du débit et d'une diminution du rapport de pression. Dans un premier temps, ceci se traduit par une augmentation de la puissance récupérée par la turbine 20. Cependant, en continuant à augmenter le rapport de section de la turbine de récupération 20, le rapport de pression devient trop faible entraînant une diminution de la puissance récupérée par la turbine de récupération 20. En outre, la turbine 18 du turbocompresseur 20 peut atteindre une limite dans l'adaptation de sa perméabilité, en particulier de son ouverture, qui entraine une diminution de la puissance d'entrainement du moteur 12.

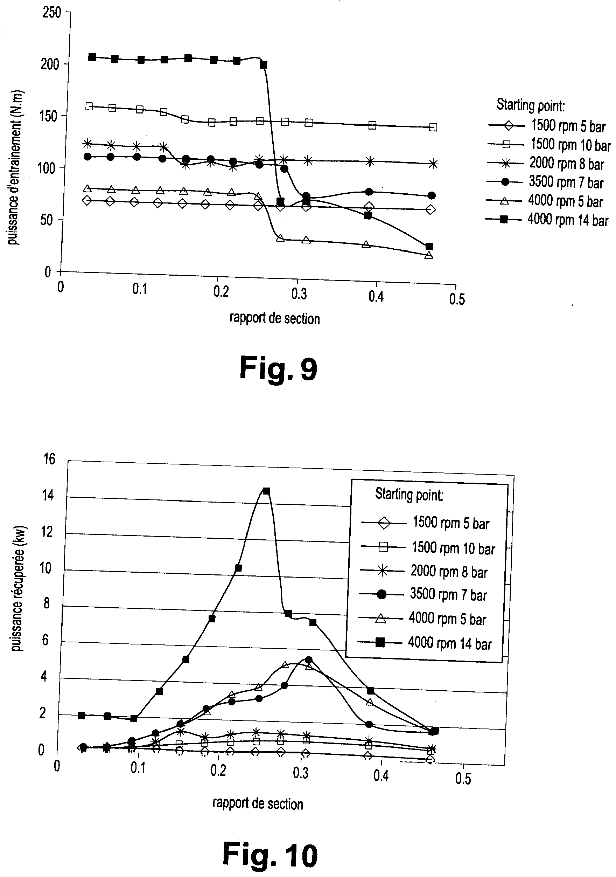

La figure 9 présente la puissance d'entrainement (N.m) en fonction de la perméabilité, ici correspondant au rapport de section du diffuseur de la turbine de récupération 20, pour un point de fonctionnement du moteur de 4000 tours/minutes et 14 bar. La valeur de puissance d'entrainement initiale est celle obtenue à l'issue de la première étape 110 du procédé et correspond au point de fonctionnement. La figure 10 présente la puissance récupérée par la turbine de récupération 20 en fonction du rapport de section de la turbine de récupération 20 pour un point de fonctionnement du moteur de 4000 tours/minutes et 14 bar.

Lorsque la puissance d'entraînement diminue de façon trop importante, l'augmentation du rapport de section, c'est-à-dire de la perméabilité, de la turbine de récupération 20 est arrêtée. Autrement dit, lorsque la différence entre la valeur de la puissance d'entraînement correspondant à la valeur du rapport de section et la valeur de puissance d'entrainement initiale obtenue à l'issue de la première étape 110 du procédé dépasse un seuil, l'augmentation du rapport de section de la turbine de récupération 20 est stoppée dans une étape 150.

De même, lorsque la puissance récupérée par la turbine de récupération 20 diminue, l'augmentation du rapport de section de la turbine de récupération 20 est stoppée dans l'étape d'arrêt 150.

Le critère sur le gain global du système 10 décrit dans le précédent mode de réalisation du procédé peut être utilisé. La figure 11 représente le gain global pour chaque valeur du rapport de section de la turbine de récupération 20. Le gain global est particulièrement utilisé lorsqu'on s'intéresse au rendement du système 10 dans son ensemble, sans contrainte sur la puissance d'entraînement délivrée par le moteur 12.

Le procédé selon l'invention peut être mis en oeuvre pour des points de fonctionnement différents du moteur. Par exemple, les figures 9 et 10 illustrent respectivement les puissances d'entrainement délivrées par le moteur 12 et les puissances récupérées par la turbine de récupération 20 pour le point de fonctionnement du moteur 4000 tours/minutes et 5 bar et d'autres points de fonctionnement.

Bien entendu, l'invention n'est pas limitée aux exemples décrits. En particulier, le procédé permet de fabriquer un système d'entraînement dans lequel le gain global ou la puissance récupérée est optimisé pour un point de fonctionnement particulier du moteur. Au cours de la vie du moteur, les paramètres géométriques peuvent rester invariants, le système étant configuré pour avoir un gain ou une puissance récupérée maximum au point de fonctionnement. Dans cette variante, la turbine 18 du turbocompresseur 16 et la turbine de récupération 20 ne sont pas forcément des turbines à géométrie variable. Leurs caractéristiques géométriques peuvent être fixées de façon définitive lors de la fabrication du système 10. En outre, le mode de réalisation illustré en figure 8 pourrait se passer des étapes de modification 120 et d'arrêt 130 de modification de la perméabilité de la turbine 18 du turbocompresseur. Le procédé d'amélioration du rendement énergétique du système 10 pourrait être réalisé en ne modifiant que les paramètres de la turbine de recouvrement 20, comme illustré aux étapes 115, 140, 150 du procédé illustré en figure 8.

La perméabilité peut être modifiée par d'autres paramètres que l'ouverture ou le rapport de section du diffuseur, par exemple par l'angle d'incidence des gaz sur les aubes de la turbine.

## Revendications

1. Procédé d'amélioration du rendement énergétique d'un système d'entraînement (10), ledit système comprenant :

   - un moteur (12) muni d'une ligne d'échappement (14) ;
   - un turbocompresseur (16) ayant une turbine (18) montée sur la ligne d'échappement pour être entrainée par une première partie des gaz d'échappement de façon à déterminer un niveau de suralimentation du moteur ;
   - une turbine de récupération (20) montée sur la ligne d'échappement en parallèle du turbocompresseur pour être entrainée par une seconde partie des gaz d'échappement de façon à récupérer une puissance issue de ladite seconde partie des gaz d'échappement ;

   ledit procédé comprenant les étapes consistant à :

   - déterminer (110) un niveau de suralimentation de sorte que le moteur délivre une première valeur de puissance d'entrainement ;
   - modifier (120) de façon croissante ou décroissante au moins un paramètre géométrique de la turbine (18) du turbocompresseur (16), et pour une valeur du paramètre géométrique, déterminer la puissance récupérée par la turbine de récupération (20) et la différence entre la valeur de la puissance d'entraînement correspondant à ladite valeur du paramètre géométrique et ladite première valeur de puissance d'entrainement ;
   - stopper (130) la modification du paramètre géométrique de la turbine (18) du turbocompresseur (16) lorsque la puissance récupérée par la turbine de récupération (20) atteint une valeur maximale ou lorsque ladite différence de puissance d'entraînement est supérieure à un seuil donné.

2. Procédé selon la revendication 1, dans lequel :

   - l'étape de modification comprend la diminution (120) de la perméabilité de la turbine (18) du turbocompresseur (16) et, pour une valeur de perméabilité, la détermination de la puissance récupérée par la turbine de récupération (20) et de la différence entre la valeur de la puissance d'entraînement correspondant à ladite valeur de perméabilité et ladite première valeur de puissance d'entrainement ;
   - l'étape d'arrêt comprend l'arrêt (130) de la diminution de la perméabilité de la turbine (18) du turbocompresseur (16) lorsque la puissance récupérée par la turbine de récupération (20) atteint une valeur maximale ou lorsque ladite différence de puissance d'entraînement dépasse un seuil donné.

3.  Procédé selon la revendication 1 ou 2, dans lequel, le turbocompresseur (16) comprenant une turbine (18) à géométrie variable, l'étape de modification du paramètre géométrique comprend la modification de la section de passage du diffuseur de la turbine et/ou la modification de l'angle d'incidence du gaz sur les aubes de la turbine.

4.  Procédé selon l'une des revendications précédentes, comprenant en outre les étapes consistant à :

    - augmenter (115) la perméabilité de la turbine de récupération (20) et, pour une valeur de perméabilité, procéder auxdites étapes de modification (120) du paramètre géométrique de la turbine (18) du turbocompresseur (16) et d'arrêt (130) de la modification du paramètre géométrique ;
    - déterminer (140) la puissance récupérée par la turbine de récupération (20) et la différence entre la valeur de la puissance d'entraînement correspondant à ladite valeur de perméabilité de la turbine (18) du turbogénérateur (16) et ladite première valeur de puissance d'entrainement ;
    - stopper (150) l'augmentation de la perméabilité de la turbine de récupération (20) lorsque la puissance récupérée par la turbine de récupération (20) atteint une valeur maximale ou lorsque ladite différence de puissance d'entraînement dépasse un seuil donné.

5.  Procédé selon la revendication 4, dans lequel, la turbine de récupération (20) étant une turbine à géométrie variable, l'étape d'augmentation de la perméabilité de la turbine comprend l'augmentation de la section de passage du diffuseur de la turbine et/ou la modification de l'angle d'incidence du gaz sur les aubes de la turbine.

**Patentansprüche**

1.  Verfahren zur Verbesserung der Energieeffizienz eines Antriebssystems (10), wobei das System umfasst:

    - einen Motor (12), der mit einer Abgasleitung (14) ausgestattet ist;
    - einen Turbolader (16), der eine Turbine (18) aufweist, die an der Abgasleitung angebracht ist, um von einem ersten Teil der Abgase angetrieben zu werden, um einen Aufladegrad des Motors zu bestimmen;

    - eine Rückgewinnungsturbine (20), die an der Abgasleitung parallel zum Turbolader angebracht ist, um von einem zweiten Teil der Abgase angetrieben zu werden, um eine Leistung aus diesem zweiten Teil der Abgase zurückzugewinnen;

    wobei das Verfahren die folgenden Schritte umfasst:

    - Bestimmen (110) eines Aufladegrades, derart, dass der Motor einen ersten Antriebsleistungswert liefert;
    - Ändern (120), durch Erhöhung oder Verringerung, wenigstens eines geometrischen Parameters der Turbine (18) des Turboladers (16), und für einen Wert des geometrischen Parameters, Bestimmen der durch die Rückgewinnungsturbine (20) zurückgewonnenen Leistung und der Differenz zwischen dem Wert der Antriebsleistung, der diesem Wert des geometrischen Parameters entspricht, und dem ersten Antriebsleistungswert;
    - Stoppen (130) der Änderung des geometrischen Parameters der Turbine (18) des Turboladers (16), wenn die durch die Rückgewinnungsturbine (20) zurückgewonnene Leistung einen maximalen Wert erreicht oder wenn die Differenz der Antriebsleistungen größer als ein gegebener Schwellenwert ist.

2.  Verfahren nach Anspruch 1, wobei:

    - der Änderungsschritt die Verringerung (120) des Durchsatzvermögens der Turbine (18) des Turboladers (16) und, für einen Wert des Durchsatzvermögens, die Bestimmung der durch die Rückgewinnungsturbine (20) zurückgewonnenen Leistung und der Differenz zwischen dem Wert der Antriebsleistung, der diesem Wert des Durchsatzvermögens entspricht, und dem ersten Antriebsleistungswert umfasst;
    - der Stoppschritt das Stoppen (130) der Verringerung des Durchsatzvermögens der Turbine (18) des Turboladers (16), wenn die durch die Rückgewinnungsturbine (20) zurückgewonnene Leistung einen maximalen Wert erreicht oder wenn die Differenz der Antriebsleistungen einen gegebenen Schwellenwert überschreitet, umfasst.

3.  Verfahren nach Anspruch 1 oder 2, wobei, wenn der Turbolader (16) eine Turbine (18) mit variabler Geometrie umfasst, der Schritt der Änderung des geometrischen Parameters die Änderung des Durchflussquerschnitts des Diffusors der Turbine und/oder die Änderung des Anströmwinkels des Gases an den Schaufeln der Turbine umfasst.

**4.** Verfahren nach einem der vorhergehenden Ansprüche, welches außerdem die folgenden Schritte umfasst:

- Erhöhen (115) des Durchsatzvermögens der Rückgewinnungsturbine (20) und, für einen Wert des Durchsatzvermögens, Durchführen der Schritte der Änderung (120) des geometrischen Parameters der Turbine (18) des Turboladers (16) und des Stoppens (130) der Änderung des geometrischen Parameters;
- Bestimmen (140) der durch die Rückgewinnungsturbine (20) zurückgewonnenen Leistung und der Differenz zwischen dem Wert der Antriebsleistung, der diesem Wert des Durchsatzvermögens der Turbine (18) des Turbogenerators (16) entspricht, und dem ersten Antriebsleistungswert;
- Stoppen (150) der Erhöhung des Durchsatzvermögens der Rückgewinnungsturbine (20), wenn die durch die Rückgewinnungsturbine (20) zurückgewonnene Leistung einen maximalen Wert erreicht oder wenn die Differenz der Antriebsleistungen einen gegebenen Schwellenwert überschreitet.

**5.** Verfahren nach Anspruch 4, wobei, wenn die Rückgewinnungsturbine (20) eine Turbine mit variabler Geometrie ist, der Schritt der Erhöhung des Durchsatzvermögens der Turbine die Vergrößerung des Durchflussquerschnitts des Diffusors der Turbine und/oder die Änderung des Anströmwinkels des Gases an den Schaufeln der Turbine umfasst.

**Claims**

**1.** Method for improving the energy efficiency of a drive system (10), said system comprising:

- an engine (12) provided with an exhaust line (14);
- a turbocharger (16) having a turbine (18) mounted on the exhaust line in order to be driven by a first portion of the exhaust gases so as to determine a level of forced induction of the engine;
- a recovery turbine (20) mounted on the exhaust line in parallel with the turbocharger in order to be driven by a second portion of the exhaust gases so as to recover power from said second portion of the exhaust gases;

said method comprising the steps of:

- determining (110) a level of forced induction such that the engine delivers a first drive power value;

- changing (120), either upwards or downwards, at least one geometric parameter of the turbine (18) of the turbocharger (16), and, for a given value of the geometric parameter, determining the power recovered by the recovery turbine (20) and the difference between the drive power value corresponding to said value of the geometric parameter and said first drive power value;
- stopping (130) the change in the geometric parameter of the turbine (18) of the turbocharger (16) when the power recovered by the recovery turbine (20) reaches a maximum value or when said difference in drive power is above a given threshold.

**2.** Method according to Claim 1, in which:

- the changing step involves reducing (120) the permeability of the turbine (18) of the turbocharger (16) and, for a given permeability value, determining the power recovered by the recovery turbine (20) and the difference between the drive power value corresponding to said permeability value and said first drive power value;
- the stopping step involves stopping (130) the reduction in the permeability of the turbine (18) of the turbocharger (16) when the power recovered by the recovery turbine (20) reaches a maximum value or when said difference in drive power exceeds a given threshold.

**3.** Method according to Claim 1 or 2, in which, since the turbocharger (16) comprises a variable geometry turbine (18), the step of changing the geometric parameter involves changing the passage cross section of the diffuser of the turbine and/or changing the angle of incidence of the gas on the blades of the turbine.

**4.** Method according to one of the preceding claims, further comprising the steps of:

- increasing (115) the permeability of the recovery turbine (20) and, for a given permeability value, proceeding to said steps of changing (120) the geometric parameter of the turbine (18) of the turbocharger (16) and stopping (130) the changing of the geometric parameter;
- determining (140) the power recovered by the recovery turbine (20) and the difference between the drive power value corresponding to said permeability value of the turbine (18) of the turbo-generator (16) and said first drive power value;
- stopping (150) the increasing of the permeability of the recovery turbine (20) when the power recovered by the recovery turbine (20) reaches a maximum value or when said drive power difference exceeds a given threshold.

5. Method according to Claim 4, in which, since the recovery turbine (20) is a variable geometry turbine, the step of increasing the permeability of the turbine involves increasing the passage cross section of the diffuser of the turbine and/or changing the angle of incidence of the gas on the blades of the turbine.

**Fig. 1**

**Fig. 3**

Fig. 4

Fig. 6

Fig. 7

**Fig. 9**

**Fig. 10**

**Fig. 11**

**Fig. 5**

Fig. 2

Fig. 8

**EP 2 986 833 B1**

**RÉFÉRENCES CITÉES DANS LA DESCRIPTION**

**Documents brevets cités dans la description**

- WO 2010092945 A1